# EUROPÄISCHE PATENTSCHRIFT

(11) **EP 0 780 585 B1**
(45) Veröffentlichungstag und Bekanntmachung des Hinweises auf die Patenterteilung: **20.10.1999**
(21) Anmeldenummer: 96120657.0
(22) Anmeldetag: 20.12.1996
(51) Int. Cl.: F16B 23/00

(54) **Antriebseinrichtung für gewindetragende Befestigungsmittel**
Drive for threaded fastener
Entraînement pour dispositif de fixation fileté

(30) Priorität: 22.12.1995 DE 29520426 U
(43) Veröffentlichungstag der Anmeldung: 25.06.1997
(73) Patentinhaber: Berner GmbH, 74653 Künzelsau (DE)
(72) Erfinder: Runge, Erich, 74653 Künzelsau (DE)
(74) Vertreter: Bunke, Holger, Dr.rer.nat. Dipl.-Chem.

(56) Entgegenhaltungen:
- EP-A- 0 670 431
- AT-B- 388 215
- FR-A- 2 729 599
- GB-A- 2 285 940
- US-A- 2 556 155

## Beschreibung

Die Erfindung betrifft eine Antriebseinrichtung für gewindetragende Befestigungsmittel, insbesondere für Schrauben und Dübel, mit einem axialsymetrisch im Kopf des Befestigungsmittel angeordneten Stern- oder Kreuzloch zur Aufnahme eines hierzu komplementär ausgebildeten Kreuzschlitzmitnehmers eines ersten Drehantriebswerkzeugs.

Derartige Antriebseinrichtungen sind besonders geformte Vertiefungen in Form eines Stern- oder Kreuzlochs in Befestigungsmitteln wie Schrauben, in welche entsprechende Kreuzschlitzmitnehmer eines Drehantriebswerkzeugs zur Drehmomentübertragung einsetzbar sind. Antriebseinrichtungen in Form von Stern- oder Kreuzlöchern sind deshalb besonders gut zur Drehmomentübertragung geeignet, weil durch sie eine stetige Zentrierung des Kreuzschlitzmitnehmers zum Befestigungsmittel während einer Drehmomentübertragung gewährleistet ist. Ein seitliches Herausgleiten des Kreuzschlitzmitnehmers aus dem Stern- oder Kreuzloch, wie dies bei Schrauben mit einem einfachen Schlitz der Fall ist, wird nämlich vermieden.

Nachteilig an der bisher bekannten Antriebseinrichtung ist, daß sie stets nur mit dem zum Stern- oder Kreuzloch komplementär ausgebildeten Kreuzschlitzmitnehmer verwendet werden kann, so daß ein Handwerker, welcher das Befestigungsmittel ein- oder herausschrauben will, stets den komplementär ausgebildeten Kreuzschlitzmitnehmer zur Hand haben muß. Da sich inzwischen jedoch auch Antriebseinrichtungen in Form eines Vielnutlochs immer mehr durchsetzen, ist oft ein zeitraubender Werkzeugwechsel erforderlich.

Aufgabe der Erfindung ist es, eine Antriebseinrichtung für gewindetragende Befestigungsmittel zu schaffen, welche universeller einsetzbar ist und dennoch hohe Drehmomente übertragen kann.

Die Aufgabe wird bei einer Antriebseinrichtung der eingangs genannten Gattung dadurch gelöst, daß sie im Kopf des Befestigungsmittels koaxial zu dem Stern- oder Kreuzloch zusätzlich ein Vielnutloch zur Aufnahme eines dazu komplementär ausgebildeten Vielnutmitnehmers eines zweiten Drehantriebswerkzeugs umfaßt.

Die erfindungsgemäße Antriebseinrichtung ist damit sowohl für den Einsatz eines Kreuzschlitzmitnehmers als auch eines Vielnutmitnehmers geeignet, so daß ein Handwerker nicht stets einen passenden Mitnehmer eines Drehantriebswerkzeugs zur Hand haben muß. Die erfindungsgemäße Antriebseinrichtung ist damit so im Befestigungsmittel ausgebildet, daß sowohl ein Kreuzschlitzmitnehmer als auch ein Vielnutmitnehmer ein Drehmoment über die Antriebseinrichtung auf das Befestigungsmittel übertragen kann.

Gemäß einer vorteilhafter Ausführungsform der Erfindung ist das Vielnutloch aus Ausnehmungen gebildet, die im Bereich der zwischen Schlitzen des Stern- oder Kreuzlochs befindlichen Stege angeordnet sind. Damit kann ein Vielnutmitnehmer mit seinen entsprechenden Vorsprüngen in die Ausnehmungen und fakultativ auch in die Schlitze des Stern- oder Solche gattungsgemäßen Antriebseinrichtungen mit Stern- oder Kreuzlöchern sind in der AT 388 215 B gezeigt, wobei bei diesem Stand der Technik Begrenzungsflächen in einem spitzen Winkel zur Mittelachse geneigt sein sollen.

Aus der US-A-2 556 155 und der AT 388 215 B sind darüber hinaus Vielnutlöcher als Antriebseinrichtungen bekannt.

Kreuzloches eingreifen, wodurch ein aufgebrachtes Drehmoment durch die verbliebenen Stege zwischen den Schlitzen auf das Befestigungsmittel übertragen wird.

Gemäß einer weiteren vorteilhaften Ausführungsform weisen die Ausnehmungen ein radial nach außen gerichtetes Kreisbogenprofil auf, so daß ein Vielnutmitnehmer mit Vorsprüngen, die ein Kreisbogenprofil aufweisen, mit der Antriebseinrichtung zusammenwirken kann.

In der bevorzugten Ausführungsform sind die Ausnehmungen des Vielnutlochs so voneinander beabstandet, daß jeweils ein gedachter, nach innen gerichteter Kreisbogen benachbarte Ausnehmungen miteinander verbindet, wobei der Kreisbogen einen doppelt so großen Durchmesser wie ein Kreisbogen hat, der dem Profil der Ausnehmungen zugeordnet ist. Die gedachten, nach innen gerichteten Kreisbögen sind damit komplementär zu Nuten in einem üblichen Vielnutmitnehmer, bei dem die Nuten ebenso wie die Vorsprünge jeweils ein Kreisbogenprofil aufweisen, wobei der Durchmesser des den Nuten zugeordneten Kreisbogens einen doppelt so großen Durchmesser wie der den Vorsprüngen zugeordnete Kreisbogen hat. Derartige Vielnutmitnehmer sind unter der Bezeichnung "Torx" erhältlich.

Weiter kann zwischen mindestens zwei benachbarten, das Vielnutloch bildenden Ausnehmungen eine radial zur Lochmitte hin vorspringende Leiste angeordnet sein. Durch diese Leiste, die sich bei eingeseztem Vielnutmitnehmer in eine Nut des Vielnutmitnehmers erstreckt, kann ein höheres Drehmoment auf das Befestigungsmittel übertragen werden.

Neben herkömmlichen Antriebseinrichtungen in Form eines Stern- oder Kreuzlochs haben sich inzwischen auch Antriebseinrichtungen mit komplementär hierzu ausgebildeten Kreuzschlitzmitnehmern unter der Bezeichnung "Pozidriv" am Markt durchgesetzt. Die entsprechenden Antriebseinrichtungen weisen im Bereich von Winkelhalbierenden zwischen benachbarten Schlitzen des Stern- oder Kreuzlochs noch zusätzliche, spitz zulaufende, im Vergleich zu den Schlitzen sehr kurze Ausnehmungen auf. Die "Pozidriv"-Mitnehmer zeichnen sich durch ein erhöhtes übertragbares Drehmoment sowie eine bessere Zentrierung von Antriebseinrichtung und Kreuzschlitzmitnehmer zueinander aus. Damit auch ein derartiger Kreuzschlitzmitnehmer mit der erfindungsgemäßen Antriebseinrichtung zusammenwirken kann, erstreckt sich gemäß einer bevorzugten Ausführungsform jeweils eine Ausnehmung in jedem Steg bis in einen Bereich von Winkelhalbierenden zwischen den umfangsmäßig benachbarten Schlitzen, die das Stern- oder Kreuzloch bilden. Ein "Pozidriv"-Mitnehmer mit, im Querschnitt betrachtet, kurzen, spitz zulaufenden Stegen zwischen den radial längeren, hauptsächlich das Drehmoment übertragenden Stegen kann damit ebenso in die Antriebseinrichtung nach der Erfindung eingesetzt werden.

Gemäß einer weiteren Ausführungsform weist das Vielnutloch sechs auf einem Umfang gleichmäßig verteilte Ausnehmungen auf, wobei sich zwei diametral gegenüberliegende Ausnehmungen entlang einer Winkelhalbierenden zwischen zwei umfangsmäßig benachbarten Schlitzen radial nach außen erstrecken. Da durch die so angeordneten Ausnehmungen die Stege zwischen den Schlitzen durch die Ausnehmungen nur relativ geringfügig geschwächt werden und keine zu dünnen Wandungen zwischen Schlitzen und Ausnehmungen vorhanden sind, die bei höherer Belastung ausbrechen würden, zeichnet sich diese Ausführungsform durch ein hohes übertragbares Drehmoment aus.

Das übertragbare Drehmoment kann nochmals erhöht werden, wenn zwei diametral gegenüberliegende Leisten vorgesehen sind, wobei eine Verbindungsgerade zwischen Vorderkanten der Leisten die Winkelhalbierende rechtwinkelig schneidet. Bei einer Drehmomentübertragung liegen damit die Kraftangriffsflächen an den Leisten einander diametral gegenüber. Damit bei dieser Ausführungsform die Verwendung eines "Pozidriv"-Mitnehmers möglich ist, können die Leisten im Bereich des Anfangs des Vielnutlochs fakultativ ausgespart sein, so daß sich die kurzen, spitz zulaufenden Stege eines "Pozidriv"-Mitnehmers in den Bereich dieser Aussparungen erstrecken.

Ebenfalls ein hohes Drehmoment kann bei einer weiteren Ausführungsform der erfindungsgemäßen Antriebseinrichtung übertragen werden, bei der das Vielnutloch sechs auf einem Umfang gleichmäßig verteilte Ausnehmungen aufweist, wobei zwei sich diametral gegenüberliegende Ausnehmungen mit Schlitzen des Stern- oder Kreuzlochs zusammenfallen. Auch bei dieser Ausführungsform werden die Stege zwischen den benachbarten Schlitzen des Stern- oder Kreuzlochs relativ geringfügig durch die Ausnehmungen geschwächt.

Es ist möglich, daß die Antriebseinrichtung aus einzelnen Nuten und Stegen zusammengesetzt ist, die ein Einsetzen eines Kreuzschlitzmitnehmers und eines Vielnutmitnehmers erlaubt. Darüber hinaus ist es gemäß einer bevorzugten Ausführungsform auch möglich, daß die Antriebseinrichtung eine Außenkontur hat, die aus einer koaxialen Überlagerung von einem Stern- oder Kreuzloch und einem Vielnutloch gebildet ist, wobei zumindest ein Teil der Außenkontur der Antriebseinrichtung aus sich abwechselnden Teilflächen der Flanken des Stern- oder Kreuzlochs und des koaxial hierzu ausgebildeten Vielnutlochs zusammengesetzt ist. Je nachdem, ob die Außenkontur des Stern- oder Kreuzlochs oder des Vielnutlochs radial von der Mittelachse der Antriebseinrichtung weiter entfernt liegt, definiert dieser radial weiter außen liegende Teil die Außenkontur der erfindungsgemäßen Antriebseinrichtung. Die axiale Tiefe der beiden koaxial überlagerten Löcher kann gleich oder verschieden sein.

Auch bei dieser Ausführungsform kann ein "Pozidriv"-Mitnehmerschlitz verwendbar sein, wenn das überlagerte Stern- oder Kreuzloch spitz zulaufende Ausnehmungen in Bereich von Winkelhalbierenden zwischen seinen Schlitzen umfaßt, die radial kürzer als die Schlitze sind.

Zur möglichst geringen Schwächung der Stege zwischen den Schlitzen des Kreuzlochs sind gemäß einer bevorzugten Ausführungsform die Lage des überlagerten Vielnutlochs sowie seine Geometrie so auf das überlagerte Stern- oder Kreuzloch und die spitz zulaufenden Ausnehmungen abgestimmt, daß das Vielnutloch die Außenkontur der Vertiefung im Bereich der spitz zulaufenden Ausnehmungen bestimmt.

Ein erfindungsgemäßer einschraubbarer Körper ist mit einer zuvor beschriebenen erfindungsgemäßen Antriebseinrichtung versehen und dadurch gekennzeichnet, daß der Körper, der vorzugsweise aus Metall oder Kunststoff besteht, ein Dübel mit Außengewinde, insbesondere ein Gipskartondübel, oder eine Schraube ist. Wenn es sich bei dem Körper um einen Dübel handelt, werden die Geometrie und die Größe seiner Antriebseinrichtung vorzugsweise so auf Geometrie und Größe der Antriebseinrichtung der in den Dübel passenden Schrauben abgestimmt bzw. einander angepaßt, daß Dübel und Schrauben mit demselben Werkzeug und demselben Mitnehmer angetrieben werden können.

Gipskartondübel mit Außengewinde haben im wesentlichen das Aussehen einer Schraube mit extremer Gewindetiefe. Damit wird ein sicherer Halt im Gipskarton erreicht. Da die Gipskartondübel wie eine Schraube in den Gipskarton eingedreht werden, haben sie im Bereich ihres Kopfes eine Antriebseinrichtung. Darüber hinaus haben sie einen hohlen Schafft, dessen Hohlraum vom Kopf des Dübels aus zugänglich ist. In diesem hohlen Schafft können nach Einsetzen des Gipskartondübels Schrauben eingedreht werden, die sich in den relativ weichen Schafft einschneiden.

Die Erfindung wird nachfolgend unter Bezugnahme auf bevorzugte Ausführungsformen erläutert, die in den beigefügten Zeichnung dargestellt sind. In dieser ist:
Fig. 1 eine stirnseitige Ansicht eines in die erfindungsgemäße Antriebseinrichtung einsetzbaren Vielnutmitnehmers;
Fig. 2 eine stirnseitige Ansicht eines in die erfindungsgemäße Antriebseinrichtung einsetzbaren Kreuzschlitzmitnehmers;
Fig. 3 eine Draufsicht auf einen Dübel mit einer bislang üblichen Antriebseinrichtung in Form eines Vielnutlochs;
Fig. 4 eine Draufsicht auf einen Dübel mit einer bislang üblichen Antriebseinrichtung in Form eines Stern- oder Kreuzlochs;
Fig. 5 eine Draufsicht auf ein einschraubbares Befestigungsmittel mit einer erfindungsgemäßen Antriebseinrichtung gemäß einer ersten Ausführungsform;
Fig. 6 eine Draufsicht auf ein einschraubbares Befestigungsmittel mit einer erfindungsgemäßen Antriebseinrichtung gemäß einer zweiten Ausführungsform.

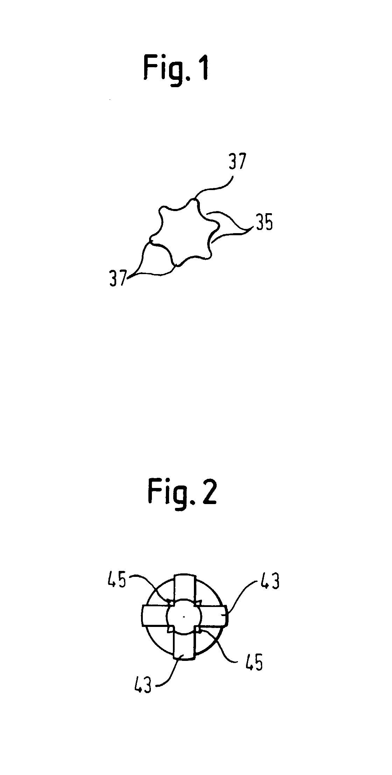

In Fig. 1 ist ein Vielnutmitnehmer eines Drehantriebswerkzeugs gezeigt, welcher Nuten 35 und Vorsprünge 37 aufweist, die jeweils ein Kreisbogenprofil haben. Die Durchmesser der den Nuten 35 zugeordneten Kreisbögen sind dabei doppelt so groß wie die Durchmesser der den Vorsprüngen 37 zugeordneten Kreisbögen. Insgesamt sind sechs Nuten 35 und sechs Vorsprünge 37 vorhanden. Dieser gezeigte Vielnutmitnehmer ist unter der Bezeichnung "Torx" als Einsatz für Drehantriebswerkzeuge bekannt.

Ein in Fig. 2 gezeigter Kreuzschlitzmitnehmer weist vier Vorsprünge 43 auf, die paarweise diametral gegenüberliegend angeordnet sind. Längs von Winkelhalbierenden zwischen benachbarten Vorsprüngen 43 erstreckt sich jeweils ein zusätzlicher, im Vergleich zu den Vorsprüngen 43 kurzer, spitz zulaufender Vorsprung 45 radial nach außen. Der in Fig. 2 gezeigte Kreuzschlitzmitnehmer ist unter der Bezeichnung "Pozidriv" als Einsatz für Drehantriebswerkzeuge bekannt.

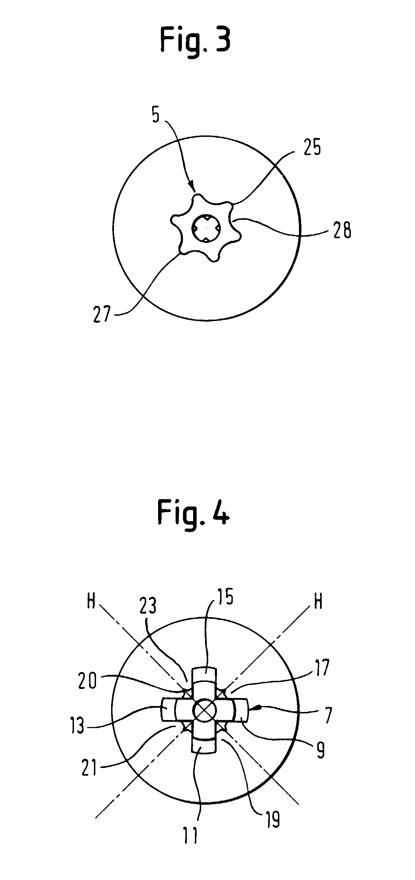

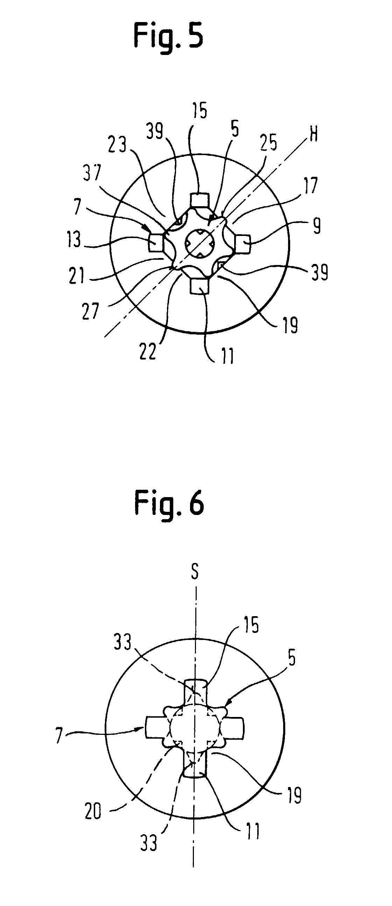

Die in den Fig. 1 und 2 gezeigten Mitnehmer zeichnen sich durch ein hohes übertragbares Drehmoment sowie eine gute Zentrierung zu einer entsprechend komplementär ausgebildeten Antriebseinrichtung für ein gewindetragendes Befestigungsmittel, z. B. eine Schraube aus. Die entsprechenden Befestigungsmittel, vorliegend Dübel, mit den komplementären Antriebseinrichtungen sind in den Fig. 3 bzw. 4 gezeigt, wobei eine in Fig. 3 gezeigte Stirnseite des Dübels mit einer Antriebseinrichtung in Form eines Vielnutlochs 5, in welches der Vielnutmitnehmer gemäß Fig. 1 einsetzbar ist, ausgebildet ist. Das Vielnutloch 5 umfaßt sechs gleichmäßig auf einem Umfang verteilte Ausnehmungen 25, 27 und Ausbuchtungen 28. Die Ausnehmungen 25 und die Ausbuchtungen 28 sind komplementär zu den Vorsprüngen 37 bzw. Nuten 35 des Vielnutmitnehmers gemäß Fig. 1 ausgebildet.

Eine in Fig. 4 gezeigte Antriebseinrichtung in Form eines Stern- oder Kreuzlochs 7 umfaßt vier Schlitze 9, 11, 13 und 15, die sich paarweise gegenüberliegen, wobei zwischen benachbarten Schlitzen Stege 17, 19, 21 und 23 vorhanden sind, die ein Drehmoment, welches durch einen eingesetzten Kreuzschlitzmitnehmer gemäß Fig. 2 aufgebracht wird, auf den Dübel übertragen. Radial in Richtung zur Lochmittel weisende Kanten der Stege 17, 19, 21, 23 sind so bearbeitet, daß sich anstatt der Kanten Ausnehmungen 20 ergeben, welche radial nach außen spitz zulaufen, so daß sich die kurzen, spitz zulaufenden Vorsprünge 45 des in Fig. 2 gezeigten Kreuzschlitzmitnehmers in sie hinein erstrecken. Die Ausnehmungen 20 dienen insbesondere zur Halterung und Zentrierung des Kreuzschlitzmitnehmers gemäß Fig. 2 in der Antriebseinrichtung.

Fig. 5 zeigt eine erste Ausführungsform einer Antriebseinrichtung, welche in einem einschraubbaren Körper in Form eines Dübels mit Außengewinde ausgebildet ist, wobei die Antriebseinrichtung sowohl auf die Verwendung eines Kreuzschlitzmitnehmers als auch eines Vielnutmitnehmers ausgerichtet ist. Die Antriebseinrichtung umfaßt dabei ein dem Stern- oder Kreuzloch 7 nach Fig. 4 entsprechendes Stern- oder Kreuzloch 7 mit vier Schlitzen 9, 11, 13 und 15, die den Schlitzen gemäß Fig. 4 entsprechen, wobei die entsprechenden Stege 17, 19, 21 und 23 jeweils unter einem 45°-Winkel zu benachbarten, sich radial nach außen erstreckenden Schlitzen abgeschrägt sind. Eine beispielsweise Abschrägung ist dabei mit der Bezugszahl 22 versehen. Zusätzlich zu dem mit den Abschrägungen 22 versehenen Stern- oder Kreuzloch 7 umfaßt die Antriebseinrichtung ein koaxial zu dem Stern-oder Kreuzloch 7 angeordnetes Vielnutloch 5, das dem in Fig. 3 gezeigten Vielnutloch 5 entspricht. Das Vielnutloch 5 erstreckt sich jedoch teilweise, in Draufsicht gesehen, unterhalb des Stern- oder Kreuzlochs 7, also teilweise axial versetzt zu diesem.

Der in die Antriebseinrichtung eingesetzte Kreuzschlitzmitnehmer nach Fig. 2 erfaßt die Antriebseinrichtung somit im oberen Teil, d. h. in einem Bereich nahe der Stirnseite des Dübels, wogegen der Vielnutmitnehmer nach Fig. 1 tiefer in die Antriebseinrichtung eindringt und diese insbesondere in einem Bereich erfaßt, der weiter von der Stirnseite entfernt ist. Damit jedoch der Vielnutmitnehmer tatsächlich auch in die Antriebseinrichtung einsetzbar ist, sind die Abschrägungen 22 so ausgebildet, daß die Vorsprünge 37 des eingesetzten Vielnutmitnehmers bis fast an die Abschrägungen 22 angrenzen. In der in Fig. 5 gezeigten Ausführungsform sind noch zwei zusätzliche, diametral gegenüberliegende Ausnehmungen 25, 27 vorgesehen, welche sich entlang einer Winkelhalbierenden H zwischen zwei umfangsmäßig benachbarten Schlitzen 9, 15 und 11, 13 über die Ausnehmungen 22 hinweg radial nach außen erstrecken, so daß die entsprechenden Vorsprünge 37 des Vielnutmitnehmers in die Ausnehmungen 25, 27 eindringen und ein Drehmoment auf den Dübel übertragen können.

Zur besseren Drehmomentübertragung sind zudem zwei diametral gegenüberliegende, radial zur Lochmitte hin vorspringende Leisten 39 vorgesehen. Eine gedachte Verbindungsgerade zwischen Vorderkanten der Leisten 39 schneidet dabei die Winkelhalbierende H in einem rechten Winkel. Die an die Leisten 39 angrenzenden Vorsprünge 37 des Vielnutmitnehmers drücken somit bei Drehmomenteinleitung seitlich an die Leisten 39, um das Drehmoment auf den Dübel zu übertragen.

Damit in die in Fig. 5 gezeigte Antriebseinrichtung auch ein Kreuzschlitzmitnehmer gemäß Fig. 2 einsetzbar ist, sind die Leisten 39 im Bereich des Anfangs des Vielnutlochs 5 ausgespart. In diesen Bereich können sich die spitz zulaufenden Vorsprünge 45 des einzusetzenden Kreuzschlitzmitnehmers erstrecken. Die Antriebseinrichtung gemäß Fig. 5 läßt auch den Einsatz von verschieden großen Torx-Einsätzen zu. Während ein großkalibriger Torx-Einsatz nur in den oberen Bereich ("Anfang") des Vielnutlochs 5 eindringt, kann ein kleinkalibriger Torx-Einsatz in tiefere Bereiche des Vielnutlochs 5 eindringen und sich bei der Übertragung eines Drehmoments im wesentlichen an den Leisten 39 abstützen.

Eine in Fig. 6 gezeigte zweite Ausführungsform der Antriebseinrichtung weist ebenfalls ein Stern- oder Kreuzloch 7 und ein koaxial hierzu ausgebildetes Vielnutloch 5 gemäß den Fig. 4 bzw. 3 auf. In dieser Ausführungsform wird jedoch die Außenkontur der Antriebseinrichtung durch eine Überlagerung des Stern- oder Kreuzlochs 7 mit dem Vielnutloch 5 erzeugt. Die Außenkontur der Antriebseinrichtung wird somit durch denjenigen Teil der Außenkontur des Stern- oder Kreuzlochs 7 oder des Vielnutlochs 5 gebildet, welcher einen größeren radialen Abstand zur Lochmitte aufweist. Die Lage und die Geometrie des Vielnutlochs 5 sind dabei so auf das überlagerte Stern- oder Kreuzloch 7 abgestimmt, daß die in Fig. 6 lediglich zur Verdeutlichung angedeuteten spitz zulaufenden Ausnehmungen 20 innerhalb des Vielnutlochs 5 liegen. Das bedeutet, daß das Vielnutloch 5 die Außenkontur der Antriebseinrichtung im Bereich der spitz zulaufenden Ausnehmungen 20 des Stern- oder Kreuzlochs 7 festlegt. Bei der in Fig. 6 gezeigten Ausführungsform der Antriebseinrichtung sind das Stern- oder Kreuzloch 7 und das Vielnutloch 5 axial nicht zueinander versetzt angeordnet.

Das Stern- oder Kreuzloch 7 ist gemäß Fig. 6 winkelmäßig so zu dem Vielnutloch 5 angeordnet, daß zwei diametral gegenüberliegende Ausnehmungen 33, mit Schlitzen 11, 15 des Kreuzlochs 7 zusammenfallen. Die Ausnehmungen 33 erstrecken sich somit längs einer Mittellinie S durch die diametral gegenüberliegenden Schlitze 11, 15. Damit ist gewährleistet, daß die Stege zwischen den benachbarten Schlitzen 9, 11, 13 und 15 durch die durch das Vielnutloch 5 hervorgerufenen Ausnehmungen nur geringfügig geschwächt werden, so daß keine dünnen Wandungen auftreten, die beim Ein- oder Ausschrauben des Dübels abgedreht werden könnten.

## Patentansprüche

1. Antriebseinrichtung für gewindetragende Befestigungsmittel, insbesondere für Schrauben und Dübel, mit einem axialsymmetrisch im Kopf des Befestigungsmittels angeordneten Stern- oder Kreuzloch (7) zur Aufnahme eines hierzu komplementär ausgebildeten Kreuzschlitzmitnehmers eines ersten Drehantriebswerkzeugs, **dadurch gekennzeichnet,** daß die Antriebseinrichtung im Kopf des Befestigungsmittels koaxial zu dem Stern- oder Kreuzloch (7) zusätzlich ein Vielnutloch (5) mit Kreisbogenförmigen Nuten und Vorsprüngen zur Aufnahme eines dazu komplementär ausgebildeten Vielnutmitnehmers eines zweiten Drehantriebswerkzeugs umfaßt.

2. Antriebseinrichtung nach Anspruch 1, **dadurch gekennzeichnet,** daß das Vielnutloch (5) aus Ausnehmungen (25, 27; 33) gebildet ist, die im Bereich der zwischen Schlitzen (9, 11, 13, 15) des Stern- oder Kreuzlochs (7) befindlichen Stege (17, 19, 21, 23) angeordnet sind.

3. Antriebseinrichtung nach Anspruch 2, **dadurch gekennzeichnet,** daß die Ausnehmungen (25, 27; 33) ein radial nach außen gerichtetes Kreisbogenprofil aufweisen.

4. Antriebseinrichtung nach Anspruch 3, **dadurch gekennzeichnet,** daß die Ausnehmungen (25, 27; 33) des Vielnutlochs (5) so voneinander beabstandet sind, daß jeweils ein gedachter, radial nach innen gerichteter Kreisbogen benachbarte Ausnehmungen (25, 27; 33) miteinander verbindet, wobei der Kreisbogen einen doppelt so großen Durchmesser wie ein Kreisbogen hat, der dem Profil der Ausnehmungen (25, 27; 33) zugeordnet ist.

5. Antriebseinrichtung nach einem der Ansprüche 2 bis 4, **dadurch gekennzeichnet,** daß zwischen mindestens zwei benachbarten, das Vielnutloch (5) bildenden Ausnehmungen (25, 27; 33) eine radial zur Lochmitte hin vorspringende Leiste (39) angeordnet ist.

6. Antriebseinrichtung nach einem der Ansprüche 2 bis 5, **dadurch gekennzeichnet,** daß sich jeweils eine Ausnehmung (25, 27) in jedem Steg (17, 19, 21, 23) bis in einen Bereich von Winkelhalbierenden (H) zwischen den umfangsmäßig benachbarten Schlitzen (9, 11, 13, 15), die das Stern- oder Kreuzloch (7) bilden, erstreckt.

7. Antriebseinrichtung nach einem der Ansprüche 2 bis 6, **dadurch gekennzeichnet,** daß das Vielnutloch (5) sechs auf einem Umfang gleichmäßig verteilte Ausnehmungen (25, 27) aufweist, wobei sich zwei diametral gegenüberliegende Ausnehmungen (25, 27) entlang einer Winkelhalbierenden (H) zwischen zwei umfangsmäßig benachbarten Schlitzen (9,15 und 11,13) radial nach außen erstrecken.

8. Antriebseinrichtung nach den Ansprüchen 5 und 7, **dadurch gekennzeichnet,** daß zwei sich diametral gegenüberliegende Leisten (39) vorgesehen sind, wobei eine Verbindungsgerade zwischen Vorderkanten der Leisten (39) die Winkelhalbierende (H) rechtwinkelig schneidet.

9. Antriebseinrichtung nach Anspruch 8, **dadurch gekennzeichnet,** daß die Leisten (39) im Bereich des Anfangs des Vielnutlochs (5) ausgespart sind.

10. Antriebseinrichtungen nach einem der Ansprüche 1 bis 6, **dadurch gekennzeichnet,** daß das Vielnutloch (5) sechs auf einem Umfang gleichmäßig verteilte Ausnehmungen (33) aufweist, wobei zwei sich diametral gegenüberliegende Ausnehmungen (33) mit Schlitzen (11, 15) des Stern- oder Kreuzlochs (7) zusammenfallen.

11. Antriebseinrichtung nach einem der Ansprüche 1 bis 10, **dadurch gekennzeichnet,** daß die Antriebseinrichtung eine Außenkontur hat, die aus einer koaxialen Überlagerung von einem Stern- oder Kreuzloch (7) und einem Vielnutloch (5) gebildet ist, wobei zumindest ein Teil der Außenkontur der Antriebseinrichtung aus sich abwechselnden Teilflächen der Flanken des Stern- oder Kreuzlochs und des Vielnutlochs zusammengesetzt ist.

12. Antriebseinrichtung nach Anspruch 11, **dadurch gekennzeichnet,** daß das überlagerte Stern- oder Kreuzloch (7) spitz zulaufende Ausnehmungen (20) im Bereich von Winkelhalbierenden (H) zwischen seinen Schlitzen (9, 11, 13, 15) umfaßt, die radial kürzer als die Schlitze (9, 11, 13, 15) sind.

13. Antriebseinrichtung nach Anspruch 12, **dadurch gekennzeichnet,** daß die Lage des überlagerten Vielnutlochs (5) sowie seine Geometrie so auf das überlagerte Stern- oder Kreuzloch (7) und die spitz zulaufenden Ausnehmungen (20) abgestimmt sind, daß das Vielnutloch (5) die Außenkontur der Vertiefung im Bereich der spitz zulaufenden Ausnehmungen (20) bestimmt.

14. Einschraubbarer Körper mit einer Antriebseinrichtung nach einem der Ansprüche 1 bis 13, **dadurch gekennzeichnet,** daß der Körper (1) ein Dübel mit Außengewinde ist.

15. Einschraubbarer Körper nach Anspruch 14, **dadurch gekennzeichnet,** daß der Dübel ein Gipskartondübel ist.

16. Einschraubbarer Körper mit einer Antriebseinrichtung nach einem der Ansprüche 1 bis 13, dadurch gekennzeichnet, daß der Körper (1) eine Schraube ist.

17. Einschraubbarer Körper nach einem der Ansprüche 14 bis 16, **dadurch gekennzeichnet**, daß der Körper (1) aus Metall oder Kunststoff besteht.

## Claims

1. Driving arrangement for thread-carrying fastening means, in particular for screws and dowels, the said driving arrangement having a star-shaped or cross-shaped hole (7), which is disposed in the head of the fastening means in an axially symmetrical manner, for receiving a cross-slot driver belonging to a first rotary driving tool, which cross-slot driver is of complementary construction to the said star-shaped or cross-shaped hole, **characterised in that** the driving arrangement additionally comprises, in the head of the fastening means and coaxially with the star-shaped or cross-shaped hole (7), a multiple-groove hole (5) with arcuate grooves and projections for receiving a multiple-groove driver belonging to a second rotary driving tool, which multiple-groove driver is of complementary construction to the said multiple-groove hole.

2. Driving arrangement according to claim 1, **characterised in that** the multiple-groove hole (5) is formed from clearances (25, 27; 33) which are disposed in the region of the webs (17, 19, 21, 23) situated between slots (9, 11, 13, 15) in the star-shaped or cross-shaped hole (7).

3. Driving arrangement according to claim 2, **characterised in that** the clearances (25, 27; 33) have an arcuate profile which is directed radially outwards.

4. Driving arrangement according to claim 3, **characterised in that** the clearances (25, 27; 33) in the multiple-groove hole (5) are spaced apart from one another in such a way that one imaginary arc in each case, which is directed radially inwards, connects adjacent clearances (25, 27; 33) to one another, the said arc having twice as great a diameter as an arc which is associated with the profile of the said clearances (25, 27; 33).

5. Driving arrangement according to one of claims 2 to 4, **characterised in that** a strip (39) which projects radially towards the centre of the hole is disposed between at least two adjacent clearances (25, 27; 33) which form the multiple-groove hole (5).

6. Driving arrangement according to one of claims 2 to 5, **characterised in that** one clearance (25, 27), in each case, in each web (17, 19, 21, 23) extends as far as a region of angle-bisecting lines (H) between the slots (9, 11, 13, 15) which are adjacent, periphery-wise, and which form the star-shaped or cross-shaped hole (7).

7. Driving arrangement according to one of claims 2 to 6, **characterised in that** the multiple-groove hole (5) has six clearances (25, 27) uniformly distributed over a periphery, two diametrically opposed clearances (25, 27) extending radially outwards along an angle-bisecting line (H) between two slots (9, 15 and 11, 13) which are adjacent, periphery-wise.

8. Driving arrangement according to claims 5 and 7, **characterised in that** two diametrically opposed strips (39) are provided, a connecting straight line between front edges of the said strips (39) intersecting the angle-bisecting line (H) at right angles.

9. Driving arrangement according to claim 8, **characterised in that** the strips (39) are recessed in the region of the beginning of the multiple-groove hole (5).

10. Driving arrangements according to one of claims 1 to 6, **characterised in that** the multiple-groove hole (5) has six clearances (33) uniformly distributed over a periphery, two diametrically opposed clearances (33) coinciding with slots (11, 15) in the star-shaped or cross-shaped hole (7).

11. Driving arrangement according to one of claims 1 to 10, **characterised in that** the said driving arrangement has an outer contour which is formed from a coaxial superimposition of a star-shaped or cross-shaped hole (7) and a multiple-groove hole (5), at least part of the outer contour of the driving arrangement being made up of alternating partial faces of the flanks of the star-shaped or cross-shaped hole and of the multiple-groove hole.

12. Driving arrangement according to claim 11, **characterised in that** the superimposed star-shaped or cross-shaped hole (7) comprises, in the region of angle-bisecting lines (H) between its slots (9, 11, 13, 15), tapering clearances (20) which are radially shorter than the said slots (9, 11, 13, 15).

13. Driving arrangement according to claim 12, **characterised in that** the location of the superimposed multiple-groove hole (5), and also its geometry, are coordinated with the superimposed star-shaped or cross-shaped hole (7) and the tapering clearances (20) in such a way that the multiple-groove hole (5) determines the outer contour of the depression in the region of the said tapering clearances (20).

14. Body which is capable of being screwed in and has a driving arrangement according to one of claims 1 to 13, **characterised in that** the said body (1) is a dowel with an external thread.

15. Body which is capable of being screwed in, according to claim 14, **characterised in that** the dowel is a plaster board dowel.

16. Body which is capable of being screwed in and has a driving arrangement according to one of claims 1 to 13, **characterised in that** the said body (1) is a screw.

17. Body which is capable of being screwed in, according to one of claims 14 to 16, **characterised in that** the said body (1) consists of metal or plastic.

## Revendications

1. Dispositif d'entraînement de moyens de fixation portant un filetage, en particulier pour des vis et des chevilles, avec un trou en forme d'étoile ou de croix (7), ménagé de façon symétrique par rapport à l'axe, dans la tête du moyen de fixation, pour recevoir un organe d'entraînement à fentes en croix, réalisé de façon complémentaire à celui-ci, d'un premier outil d'entraînement rotatif, caractérisé par le fait que le dispositif d'entraînement comprend dans la tête du moyen de fixation, coaxialement par rapport au trou en forme de croix ou d'étoile (7), en plus un trou à plusieurs rainures (5) ayant des rainures et des saillies en forme d'arc de cercle, pour recevoir un organe d'entraînement à plusieurs rainures, de configuration complémentaire, appartenant à un deuxième outil d'entraînement rotatif.

2. Dispositif d'entraînement selon la revendication 1, caractérisé par le fait que le trou à plusieurs rainures (5) est constitué d'évidements (25, 27; 33) qui sont ménagés dans la zone des nervures (17, 19, 21, 23) se trouvant entre des fentes (9, 11, 13, 15) du trou en forme d'étoile ou de croix (7).

3. Dispositif d'entraînement selon la revendication 2, caractérisé par le fait que les évidements (25, 27; 33) présentent un profil en arc de cercle tourné radialement vers l'extérieur.

4. Dispositif d'entraînement selon la revendication 3, caractérisé par le fait que les évidements (25, 27; 33) du trou à plusieurs rainures (5) sont espacés les uns les autres de manière qu 'un arc de cercle imaginaire respectif , tourné radialement vers l'intérieur, relie ensemble des évidements (25, 27; 33) voisins, l'arc de cercle ayant un diamètre double d'un arc de cercle associé au profil des évidements 25, 27; 33).

5. Dispositif d'entraînement selon l'une des revendications 2 à 4, caractérisé par le fait qu'entre au moins deux évidements (25, 27; 33) voisins, constituant le trou à plusieurs rainures (5), est disposée une bande (35), en saillie radialement par rapport au centre du trou.

6. Dispositif d'entraînement selon l'une des revendications 2 à 5, caractérisé par le fait que chaque évidement (25, 27) dans chaque nervure (17, 19, 21, 23) s'étend jusque dans une zone des bissectrices (H) entre les fentes (9, 11, 13, 15) voisines en périphérie, qui constituent le trou en forme d'étoile ou de croix (7).

7. Dispositif d'entraînement selon l'une des revendications 2 à 6, caractérisé par le fait que le trou à plusieurs rainures (5) présente six évidements (25, 27) répartis régulièrement sur une périphérie, deux évidements (25, 27), diamétralement opposés, s'étendant radialement vers l'extérieur le long d'une bissectrice (H) entre deux fentes (9, 15 et 11, 13) voisines en périphérie.

8. Dispositif d'entraînement selon les revendications 5 et 7, caractérisé par le fait que deux bandes (39) diamétralement opposées sont prévues, une droite de liaison tracée entre l'arête avant des bandes (39) coupant à angle droit la bissectrice (H).

9. Dispositif d'entraînement selon la revendication 8, caractérisé par le fait que les bandes (39) sont évidées dans la zone de l'amorce du trou à plusieurs rainures (5).

10. Dispositifs d'entraînement selon l'une des revendications 1 à 6, caractérisés par le fait que le trou à plusieurs rainures (5) présente six évidements (33) répartis régulièrement sur une périphérie, deux évidements (33) diamétralement opposés coïncidant avec des fentes (11, 15) du trou en forme d'étoile ou de croix (7).

11. Dispositif d'entraînement selon l'une des revendications 1 à 10, caractérisé par le fait que le dispositif d'entraînement a un contour extérieur qui est constitué d'une superposition coaxiale, d'un trou en forme d'étoile ou de croix (7) et d'un trou à plusieurs rainures (5), au moins une partie du contour extérieur du dispositif d'entraînement étant composée, avec alternance, de faces partielles des flancs du trou en forme d'étoile ou de croix et du trou à plusieurs rainures.

12. Dispositif d'entraînement selon la revendication 11, caractérisé par le fait que le trou en forme d'étoile ou de croix (7) superposé comprend des évidements (20) allant en évoluant de façon pointue dans la zone des bissectrices (H) entre ses fentes (9, 11, 13, 15), qui sont radialement plus courtes que les fentes (9, 11, 13, 15).

13. Dispositif d'entraînement selon la revendication 12, caractérisé par le fait que la position du trou à plusieurs rainures (5) superposées ainsi que sa géométrie sont adaptées au trou en forme d'étoile ou de croix (7) superposé et aux évidements (20) à allure pointue, et que le trou à plusieurs rainures (5) détermine le contour extérieur du creusement ménagé dans la zone des évidements (20) à allure pointue.

14. Corps susceptible d'être vissé avec un dispositif d'entraînement selon l'une des revendications 1 à 13, caractérisé par le fait que le corps (1) est une cheville dotée d'un filetage.

15. Corps susceptible d'être vissé selon la revendication 14, caractérisé par le fait que la cheville est une cheville pour plaque de parement en plâtre.

16. Corps susceptible d'être vissé avec un dispositif d'entraînement selon l'une des revendications 1 à 13, caractérisé par le fait que le corps (1) est une vis.

17. Corps susceptible d'être vissé selon l'une des revendications 14 à 16, caractérisé par le fait que le corps (1) est en métal ou en matière synthétique.
